# EUROPEAN PATENT APPLICATION

(11) **EP 2 060 436 A2**
(43) Date of publication of application: **20.05.2009**
(21) Application number: 08168995.2
(22) Date of filing: 13.11.2008
(51) Int. Cl.: B60N 2/30, B60N 2/38

(54) **Folding seat for the passenger of a vehicle**

(30) Priority: 14.11.2007 IT MI20072164
(71) Applicant: Same Deutz-Fahr Group SpA, 24047 Treviglio (Bergamo) (IT)
(72) Inventor: Salvini, Tiziano, 20067 Tribiano (Milan) (IT)
(74) Representative: De Gregori, Antonella

(57) **Abstract**

The invention describes a folding seat (10) for the passenger of a vehicle, in particular but not exclusively a farming machine. The seat (10) comprises a seat plane (12) and a backrest (14) operatively connected together by means of a connection and moving group (16). The connection and moving group (16) is in turn operatively connected to a fixed support structure (18) and is provided with a plurality of hinges (20, 22, 24) that allow the articulation of the seat plane (12) and of the backrest (14), with respect to the support structure (18), about a plurality of different axes. In this way, the seat (10) can be folded, rotated and translated between an open or working position and a closed or rest position with minimal bulk.

## Description

The present invention refers to a folding seat suitable for receiving the passenger of a vehicle, represented in particular but not exclusively by a farming machine.

The driver's compartment of a modern farming machine, like for example a tractor, a combine harvester, etc., whilst being equipped with a seat capable of ensuring adequate comfort and safety for the driver, is not normally provided with sufficient space to comfortably receive one or more passengers. However, it is necessary, in certain conditions of use of the farming machine, to be able to have at least a second seat, in addition to that of the driver, to transport a passenger in sufficient comfort, even only for short journeys.

The solution of adopting a removable seat, in other words not fixedly connected in any way to a fixed part of the driver's compartment as does, on the other hand, occur for the driver's seat, could in a sense at least partially solve the problems linked to bulk, but it has obvious drawbacks linked to a total lack of safety. Indeed, it should be taken into account that, also as far as the passenger seat of a farming machine is concerned, used only occasionally and in generic conditions of low risk to the well-being of the occupant, certain safety standards must be ensured based upon the applicable regulations of the field. For example, the passenger seat, just as occurs for the driver's seat, should also be provided with a seatbelt capable of holding back the occupant in the case of an accident.

In order to limit the bulk of the passenger seat as much as possible, especially when not used, and at the same time to keep the safety standards high for the passenger himself, up to now solutions have been made that foresee the possibility of folding the backrest and/or seat plane of such a seat, which is normally positioned in the compartment in the space defined by the windshield, door, wheelhouse and driver's seat. However, even if made so as to be able to fold up, passenger seats according to the prior art, like for example the one illustrated in patent application No. EP-A-1813468, are quite bulky even in the folded or rest configuration, possibly preventing or at least making it difficult for the driver to enter and exit the driver's compartment of the vehicle.

The purpose of the present invention is therefore to make a folding seat for the passenger of a vehicle, in particular but not exclusively a farming machine, able to have a minimal bulk when not in use, therefore not in any way hindering access to the driver's position and the driver's normal movements.

Another purpose of the invention is also to make a folding seat for the passenger of a vehicle that can ensure an adequate level of safety and comfort for the occupant, thus being able to be equipped where necessary with seatbelts or with other analogous devices foreseen by the applicable regulations.

Yet another purpose of the invention is finally that of being able to have a folding seat for the passenger of a vehicle that is simple to use and cost-effective to manufacture.

These purposes according to the present invention are accomplished by making a folding seat for the passenger of a vehicle, in particular but not exclusively a farming machine, as outlined in claim 1.

Further characteristics of the invention are outlined by the subsequent claims.

The characteristics and advantages of a folding seat for the passenger of a vehicle according to the present invention shall become clearer from the following description, given as a non-limiting example, referring to the attached schematic drawings, in which:
figure 1 is a top side view of a particular example embodiment of a folding seat for the passenger of a vehicle according to the present invention, shown in open or use configuration;
figure 2 is a front view of the seat of figure 1;
figure 3 is a plan view from above of the seat of figure 1; and
figures 4 to 8 show the different operating steps of a folding seat for the passenger of a vehicle made according to the present invention.

With reference to the figures, a folding seat made according to the present invention is shown, wholly indicated with reference numeral 10. The seat 10 substantially comprises a seat plane 12 and a backrest 14, operatively connected together by means of a connection and moving group 16. The connection and moving group 16 is in turn operatively connected to a support structure 18 for the seat 10 that can be fixedly connected to a fixed part of the driver's compartment of the vehicle, like for example the mudguard that covers one of the rear wheels of a farming tractor.

According to the invention, the connection and moving group 16 is provided with a series of hinges that allow the articulation of the seat plane 12 and of the backrest 14 of the seat 10, with respect to the support structure 18, about a plurality of different axes, so that the seat 10 itself, when not in use, can be folded, rotated and translated in a suitable position of the driver's compartment of the vehicle, so as not to hinder access to the driving position.

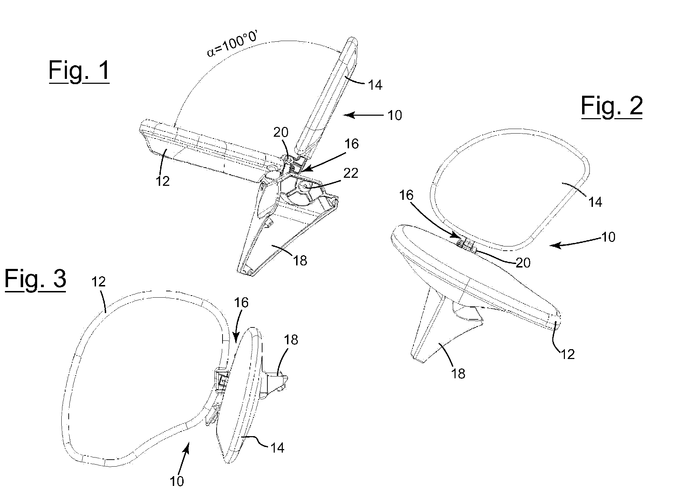

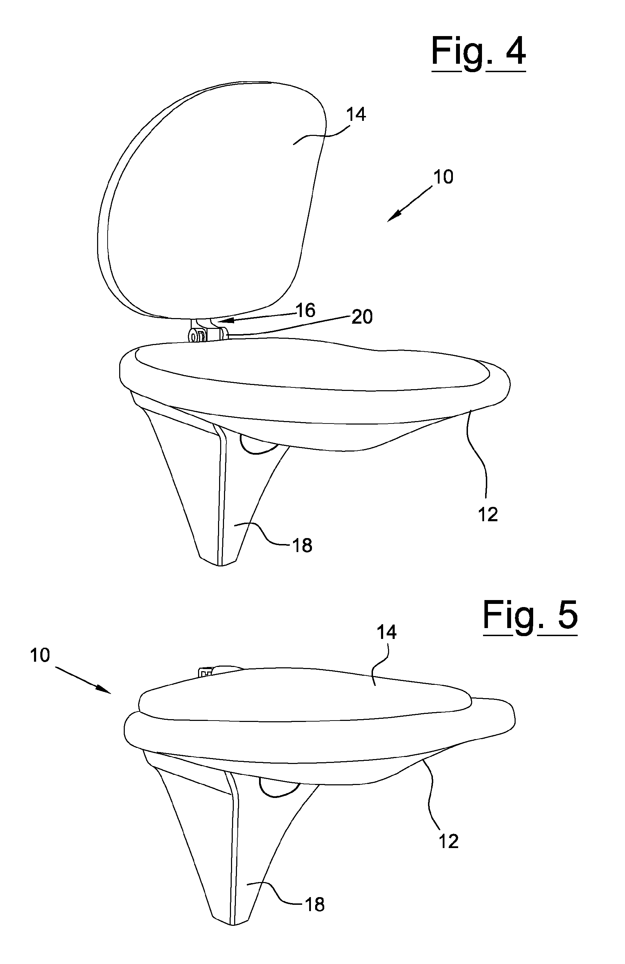

More specifically, the connection and moving group 16 foresees the presence of a first hinge 20 that connects the seat plane 12 with the backrest 14, said first hinge 20 being suitable for rotating such a backrest 14 with respect to such a seat plane 12 about a first substantially horizontal axis. In this way, the seat 10 can pass from an open or usage configuration (figure 4), in which the seat plane 12 is substantially horizontal and forms an angle α with the backrest 14 (figure 1) sufficiently large to allow the user to sit down comfortably, to a closed configuration, in which the backrest 14 is folded onto the seat plane 12 in a substantially horizontal position (figure 5).

The connection and moving group 16 thus foresees the presence of a second hinge 22 that connects the assembly consisting of the seat plane 12 and the backrest 14 with the support structure 18. The function of this second hinge 22 is to rotate the assembly consisting of the seat plane 12 and the backrest 14 with respect to the support structure 18 about a second horizontal axis, parallel or coinciding with the first horizontal rotation axis of the first hinge 20.

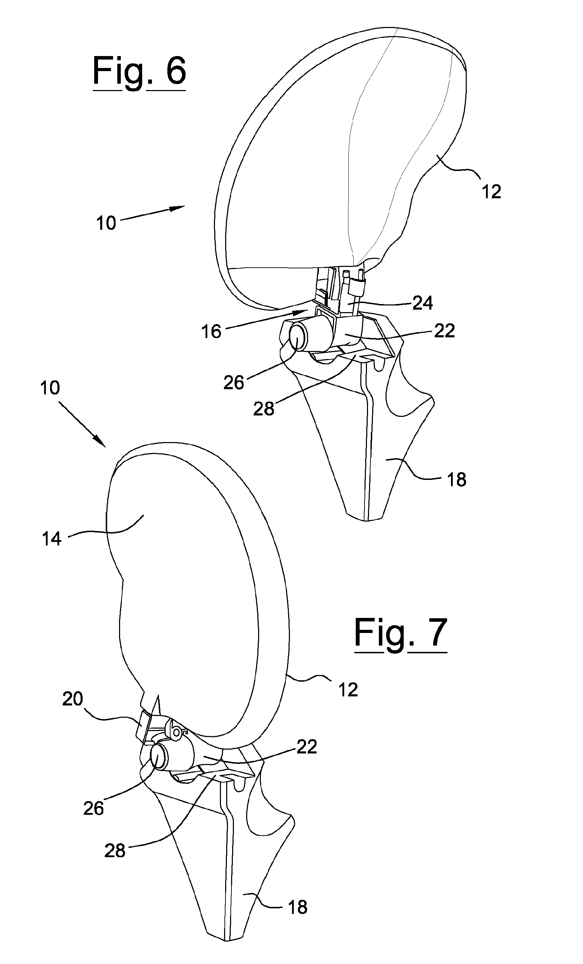

The connection and moving group 16 finally foresees the presence of a third hinge 24 (figure 6) that connects the assembly consisting of the seat plane 12 and the backrest 14 with the aforementioned second hinge 22. The third hinge 24 allows the assembly consisting of the seat plane 12 and the backrest 14 to be made to rotate, with respect to the support structure 18, about a third axis substantially perpendicular to the first and second axis mentioned earlier. In this way it is possible to pass from the configuration shown in figure 6, in which the seat plane 12 and the backrest 14, folded onto one another, sit on an almost vertical plane perpendicular for example to the direction of travel of the vehicle, to the configuration shown in figure 7, in which the seat plane 12 and the backrest 14, again folded onto one another and again sitting on a vertical plane, are aligned with the direction of travel of the vehicle. The seat 10 can thus be positioned in an area of the compartment of the vehicle in which it does not cause the slightest disturbance to the driver, like for example between the driver's seat (not shown) and the mudguard of the vehicle itself.

The seat plane 12 and the backrest 14, of substantially similar shape and size so as to be able to occupy the smallest possible space in their folded configuration, can be padded or not and coated in a *per sé* known way. In order to keep the seat 10 in a correct open position, so as to consequently ensure an adequate degree of safety and comfort for the occupant, there can be means 26 for blocking the rotation of one or more of the hinges 20, 22 and 24. The blocking means 26 can for example consist of a ring nut (figures 6-8) that can be manually actuated by the user. Preferably, the maximum opening angle α between the seat plane 12 and the backrest 14 is equal to about 100° (figure 1), sufficient to keep the passenger sat in a comfortable and safe position.

In order to ensure that the seat plane 12 rests safely on the support structure 18 of the seat 10, such a support structure 18 can be provided with a support portion 28, substantially horizontal, that keeps such a seat plane 12 still and stable in operative position even when carrying very heavy passengers.

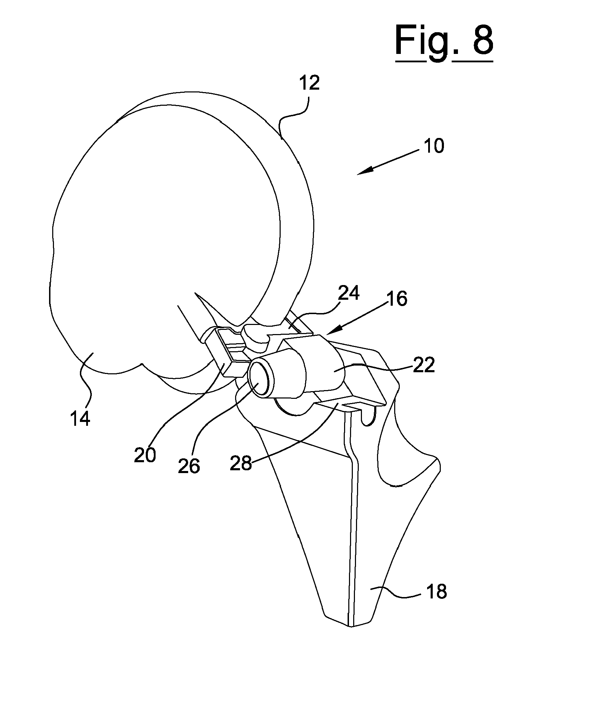

With reference in particular to figures 4 to 8 the sequence of movements that allow the seat 10 to be taken from the operative or open position of figure 4 to the rest position, completely folded, of figure 8 is shown.

After having optionally disengaged the blocking means 26, firstly the backrest 14 is rotated around the horizontal axis defined by the first hinge 20, folding it into horizontal position on the seat plane 12 (figure 5). At this point, the assembly consisting of the seat plane 12 and the backrest 14 is lifted, making it rotate around the horizontal axis defined by the second hinge 22, until the configuration shown in figure 6 is obtained.

A second rotation of the assembly consisting of the seat plane 12 and the backrest 14, this time about the substantially vertical axis of the third hinge 24, allows the seat 10 to be taken into the configuration of figure 7. Finally, a last rotation about the horizontal axis defined by the second hinge 22 (figure 8) allows the seat 10 to be definitively positioned in the only useful space normally present in the compartment of a farming machine, in other words in the gap between the driver's seat and the mudguard or the side wall of the compartment itself. In the position of figure 8, as well as freeing the passage area of the door of the driver's compartment of the vehicle, the seat 10 that has been completely folded up is indeed of minimal intrusion to the driving position, allowing the driver to move freely and in total safety.

The same sequence of movement described above, carried out in reverse, allows the seat 10 to be taken back into the open or working position of figure 4, in which all or part of the numerous articulations between the seat plane 12 and the backrest 14 can be kept still by means of the ring nut 26. Therefore, an excellent stability of the seat 10 is obtained, with a high level of comfort and safety for the passenger, who can optionally benefit from the help of a seatbelt (not shown).

It has thus been seen that the folding seat for the passenger of a vehicle, in particular but not exclusively a farming machine, according to the present invention achieves the purposes outlined earlier.

The folding seat for the passenger of a vehicle of the present invention thus conceived can in any case undergo numerous modifications and variants, all of which are covered by the same inventive concept; moreover, all of the details can be replaced by technically equivalent elements, whereas the shapes and sizes can be whatever according to the technical requirements.

The scope of protection of the invention is therefore defined by the attached claims.

## Claims

1. Folding seat (10) for the passenger of a vehicle, of the type comprising a seat plane (12) and a backrest (14) operatively connected together by means of a connection and moving group (16), said connection and moving group (16) in turn being operatively connected to a fixed support structure (18) for said seat (10), **characterised in that** said connection and moving group (16) is provided with a plurality of hinges (20, 22, 24) that allow the articulation of said seat plane (12) and of said backrest (14), with respect to said support structure (18), about a plurality of different axes, so that said seat (10) can be folded, rotated and translated between an open or working position and a closed or rest position.

2. Seat (10) according to claim 1, **characterised in that** said connection and moving group (16) foresees the presence of a first hinge (20) that connects said seat plane (12) with said backrest (14), said first hinge (20) being suitable for rotating said backrest (14) with respect to said seat plane (12) about a first substantially horizontal axis.

3. Seat (10) according to claim 2, **characterised in that** said seat plane (12), in the open or working position of said seat (10), is substantially horizontal and forms an angle (α) equal to about 100° with said backrest (14).

4. Seat (10) according to claim 2, **characterised in that** said backrest (14), in the closed or rest position of said seat (10), is folded onto said seat plane (12) in a substantially horizontal position.

5. Seat (10) according to claim 2, **characterised in that** said connection and moving group (16) foresees the presence of a second hinge (22) that connects the assembly consisting of said seat plane (12) and said backrest (14) with said support structure (18), said second hinge (22) being suitable for rotating said assembly with respect to said support structure (18) about a second horizontal axis parallel or coinciding with said first horizontal rotation axis of said first hinge (20).

6. Seat (10) according to claim 5, **characterised in that** said connection and moving group (16) foresees the presence of a third hinge (24) that connects said assembly with said second hinge (22), said third hinge (24) being suitable for rotating said assembly with respect to said support structure (18) about a third axis substantially perpendicular to said first and second axis, respectively, of said first (20) and second (22) hinge.

7. Seat (10) according to any one of the previous claims, **characterised in that** said connection and moving group (16) comprises means (26) for blocking the rotation of one or more of said hinges (20, 22, 24), in order to keep said seat (10) in a correct open or working position.

8. Seat (10) according to claim 7, **characterised in that** said blocking means (26) consist of a ring nut that can be actuated manually by the user.

9. Seat (10) according to any one of the previous claims, **characterised in that** said support structure (18) is provided with a support portion (28), substantially horizontal, suitable for keeping said seat plane (12) still and stable when said seat (10) is in open or working position.
